# EUROPÄISCHE PATENTSCHRIFT

(11) **EP 1 433 736 B1**
(45) Veröffentlichungstag und Bekanntmachung des Hinweises auf die Patenterteilung: **14.09.2005**
(21) Anmeldenummer: 03029153.8
(22) Anmeldetag: 18.12.2003
(51) Int. Cl.: B66B 5/24, F16D 69/00

(54) **Bremsbacke zum Bremsen eines Seils**
Braking shoe for ropes
Patin de frein pour câble

(30) Priorität: 24.12.2002 EP 02406146
(43) Veröffentlichungstag der Anmeldung: 30.06.2004
(73) Patentinhaber: INVENTIO AG, CH-6052 Hergiswil (CH)
(72) Erfinder: Windlin, Walter, Dipl. Ing. HTL, 6055 Alpnach Dorf (CH)

(56) Entgegenhaltungen:
- EP-A- 0 921 332
- WO-A-00/78660
- WO-A-02/32801
- GB-A- 2 287 451
- US-A- 5 228 540
- US-B1- 6 167 992

## Beschreibung

Die vorliegende Erfindung betrifft eine Bremsbacke nach dem Oberbegriff des Patentanspruchs 1.

Derartige Bremsbacken werden insbesondere in Einrichtungen zur Begrenzung der Geschwindigkeit von Aufzugskabinen von Hochleistungsaufzügen benutzt. Hierbei wird als Hilfsseil ein geschlossenes Seil, nämlich ein so genanntes Geschwindigkeitsbegrenzerseil benutzt, das im Folgenden abgekürzt als Seil bezeichnet ist. Dieses Seil läuft um eine Seilrolle eines oben in einem Aufzugsschacht angebrachten Geschwindigkeitsbegrenzers und um eine unten im Aufzugsschacht angebrachte Spannrolle, und es ist über einen Fangvorrichtungs-Auslösehebel mit der Aufzugskabine verbunden. Übersteigt die Geschwindigkeit der Aufzugskabine eine gewisse Grenzgeschwindigkeit, zum Beispiel etwa 10 Meter pro Sekunde, so wird das Geschwindigkeitsbegrenzerseil durch den Geschwindigkeitsbegrenzer blockiert, wodurch das gebremste Seil den sich mit der fahrenden Aufzugskabine bewegenden Fangvorrichtungs-Auslösehebel betätigt und damit die in der Kabine angebrachte Fangvorrichtung auslöst.

Bekannt sind Einrichtungen zum Bremsen bzw. Blockieren von Seilen mit Bremsbacken, die einen Bremsbackenkörper und eine daran befestigte durchgehenden Bremsschicht aufweisen, mit einer Wirkfläche, die beim Bremsen zur Anlage am Seil gebracht wird.

Mit der US-6,371,261-B1 sind Bremsbacken bekannt geworden, die im Wesentlichen aus einem Bremsbackenkörper und aus Belägen bzw. Schichten mit dem abzubremsenden Seil zugewandten Wirkflächen bestehen, wobei mehrere, voneinander beabstandete erste Schichtbereiche vorhanden sind, zwischen denen zweite Schichtbereiche aus einem anderen Material angeordnet sind; die zweiten Schichtbereiche ragen über die ersten Schichtbereiche vor, derart, dass beim Bremsen nur die dem Seil zugewandten zweiten Schichtbereiche das Seil berühren; nur die zweiten Schichtbereiche bilden hierbei effektive Wirkflächen bzw. Bremsflächen, es sei denn, sie wären so sehr abgenutzt, dass sie bündig mit den ersten Schichtbereichen liegen würden.

Nachteilig bei den bisher bekannten Einrichtungen dieser Art bzw. bei den bisher verwendeten Bremsbacken ist es, dass beim Einleiten einer Bremsung zwecks Geschwindigkeitsbegrenzung das Seil praktisch ruckartig abgebremst wird. Dies ist einerseits für Passagiere einer Aufzugskabine sehr unangenehm und hat anderseits temporär hohe mechanische Materialbelastungen zur Folge, was zu einem starken Materialverschleiss führt.

Die Aufgabe der Erfindung wird darin gesehen, eine verbesserte Bremsbacke der eingangs genannten Art vorzuschlagen, die einerseits verschleissfest ist und anderseits eine ruckartige Bremsung vermeidet und eine Verwendung einer solchen Bremsbacke anzugeben.

Erfindungsgemäss wird die Aufgabe durch die im Patentanspruch 1 angegebenen Massnahmen gelöst.

Vorteilhafte Ausgestaltungen und Weiterbildungen der Erfindung gehen aus den abhängigen Ansprüchen 2 bis 10 hervor.

Die neue Bremsbacke ist so ausgebildet, dass ihre dem Seil zugewandte Bremsschicht aus mindestens zwei Schichtbereichen besteht, die durch unterschiedliche Materialien gebildet, einander benachbart angeordnet und so ausgestaltet sind, dass beim Bremsen, dass heisst, wenn sich die Bremsbacke in ihrer Wirklage befindet, die Flächenbereiche dieser Schichtbereiche zusammen am Seil anliegen; hierbei bilden sowohl die ersten Schichtbereiche, das heisst die Bereiche aus dem ersten Material, wie auch die zweiten Schichtbereiche, das heisst die Bereiche aus dem zweiten Material, effektive Wirkflächen bzw. Bremsflächen.

Mit der neuen Bremsbacke gelingt es, die unterschiedlichen, im Hinblick auf eine erwünschte Art des Bremsens positiven Wirkeigenschaften der beiden Materialien zeitgleich zu nutzen. Zwar wird beim Einsatz der neuen Bremsbacke im Allgemeinen der Bremsweg verlängert, aber es gelingt, sowohl ein zuverlässiges Bremsen bzw. eine gewünschte oder vorgeschriebene Geschwindigkeitsbegrenzung zu gewährleisten, als auch eine ruckartige, materialverschleissende Bremsung zu verhindern. Insgesamt resultiert eine Synergie zwischen Flächenbereichen aus einem ersten Material, das für sich allein eine ruckartige Bremsung verursachen würde aber haltbarer ist, und Flächenbereichen aus einem zweiten Material, das für sich allein eine sanftere, ggfs. zu sanfte Bremswirkung verursachen würde aber sehr verschleissanfällig ist.

Durch eine geeignete Dimensionierung und Anordnung der Schichtbereiche der Wirkfläche, die durch die verschiedenen Materialien gebildet sind, kann die Durchführung des Bremsens optimiert werden.

Im Weiteren kann durch eine geeignete Formgebung der Schichtbereiche, ggfs. mit Lücken, erreicht werden, dass Abriebpartikel, die beim Bremsen durch die Reibung zwischen dem Seil und der Wirkfläche der Bremsschicht entstehen, so gelenkt werden, dass sie nicht störend wirken.

Wie schon erwähnt, liegen die dem Seil zugewandten Schichtbereiche bzw. die sie begrenzenden Flächenbereiche der Bremsbacke unter Druck am zu bremsenden Seil an, wenn sich die Bremsbacke in ihrer Wirklage befindet. Die Bremsflächen aller verschiedenen Schichtbereiche liegen dann mindestens annähernd in in Richtung des Seils kontinuierlichen Flächen, die im Wesentlichen komplementär zur Aussenfläche des Seiles geformt sind, so dass das Seil beim Bremsen teilweise durch die Bremsflächen umschlossen ist. Vorzugsweise werden das erste und das zweite und ggfs. weitere Materialien, aus denen die Bremsschicht hergestellt ist, so gewählt, dass die Bremsfläche auch dann eine zur Aussenfläche des Seils im Wesentlichen komplementäre, kontinuierliche Fläche - ggfs. mit kleinen Lücken - bildet, wenn die Bremsbacke nicht ihre Wirklage einnimmt. Das heisst, dass die Bremsschicht auch dann keine vorspringenden Bereiche aufweist, wenn sich die Bremsbacke nicht in ihrer Wirklage befindet. Solche vorspringende Bereiche könnten beispielsweise aus leicht kompressiblem oder sonstwie leicht deformierbarem Material hergestellt sein, so dass die Bremsschicht erst bei der Anlage am Seil eine zum Seil komplementäre Form erhalten würde.

Die neue Bremsbacke ist im Allgemeinen so ausgebildet, dass sie einen Bremsbackenkörper aufweist, welcher die mindestens zwei Schichtbereiche der Bremsschicht umfasst.

Bei einer bevorzugten Ausbildung der Bremsbacke ist der Bremsbackenkörper selbst aus einem der beiden Materialien hergestellt. Der Bremsbackenkörper kann aber auch aus einem anderen geeigneten Werkstoff in Form eines Blockes oder einer Trägerstruktur hergestellt sein.

Im Allgemeinen ist die Bremsbacke so ausgebildet, dass die Schichtbereiche aus dem einen der Materialien zwar miteinander verbunden sind, aber an der dem Seil zugewandten Seite Ausnehmungen aufweisen, in welchen die Schichtbereiche aus dem anderen der Materialien aufgenommen sind.

Die Schichtbereiche aus den unterschiedlichen Materialien können in Richtung der Relativbewegung zwischen Seil und Bremsbacke hintereinander und/oder quer zu dieser Richtung oder in einer beliebigen Konfiguration, beispielsweise fischgrätmuster-artig, angeordnet sein.

Jeweils benachbarte Schichtbereiche aus unterschiedlichen Materialien können entweder unmittelbar aneinander angrenzen oder voneinander durch Lücken getrennt sein.

In einer bevorzugten Ausführung der Bremsbacke wird als erstes Material ein metallisches Material gewählt, wobei sich zum Beispiel Bronze, insbesondere Aluminiumbronze sehr gut bewährt.

Das erste Material kann auch ein hartgummi-artiges oder synthetisches Material bzw. ein Kunststoff sein, der vorzugsweise eine Faserverstärkung aufweist.

Als besonders vorteilhaft hat es sich erwiesen, mindestens für das zweite Material ein gesintertes Material zu wählen.

In einer Weiterbildung der Bremsbacke kann die zur Anlage am Seil bestimmte Bremsschicht mindestens einen Schichtbereich aus einem weiteren geeigneten Material aufweisen.

Weitere Vorteile und Einzelheiten der Erfindung werden im Folgenden anhand von Ausführungsbeispielen und mit Bezug auf die Zeichnung ausführlich beschrieben.

Es zeigen:
- Fig. 1A: zwei Bremsbacken nach der Erfindung, nicht in Wirklage, mit einem abzubremsenden vertikalen Seil, in einem vereinfachten Horizontalschnitt;
- Fig. 1B: die in Fig. 1 dargestellten Bremsbacken, in Wirklage, in gleicher Darstellung wie Fig. 1A;
- Fig. 2A: eine erste Bremsbacke nach der Erfindung, ausschnittsweise, in einem Vertikalschnitt;
- Fig. 2B: eine zweite Bremsbacke nach der Erfindung, in gleicher Darstellung wie Fig. 2A;
- Fig. 2C: eine dritte Bremsbacke nach der Erfindung, in gleicher Darstellung wie die Fig. 2A und 2B;
- Fig. 3A: eine vierte Bremsbacke nach der Erfindung, ausschnittsweise, in einer Frontalansicht;
- Fig. 3B: eine fünfte Bremsbacke nach der Erfindung, in gleicher Darstellung wie Fig. 3A;
- Fig. 3C: eine sechste Bremsbacke nach der Erfindung, in gleicher Darstellung wie die Fig. 3A und 3B;
- Fig. 4: einen Geschwindigkeitsbegrenzer mit einer Seilrolle und einer Bremseinrichtung für ein zu bremsendes Seil, in einer Lage, in der das Seil nicht gebremst ist, in einer seitlichen Ansicht;

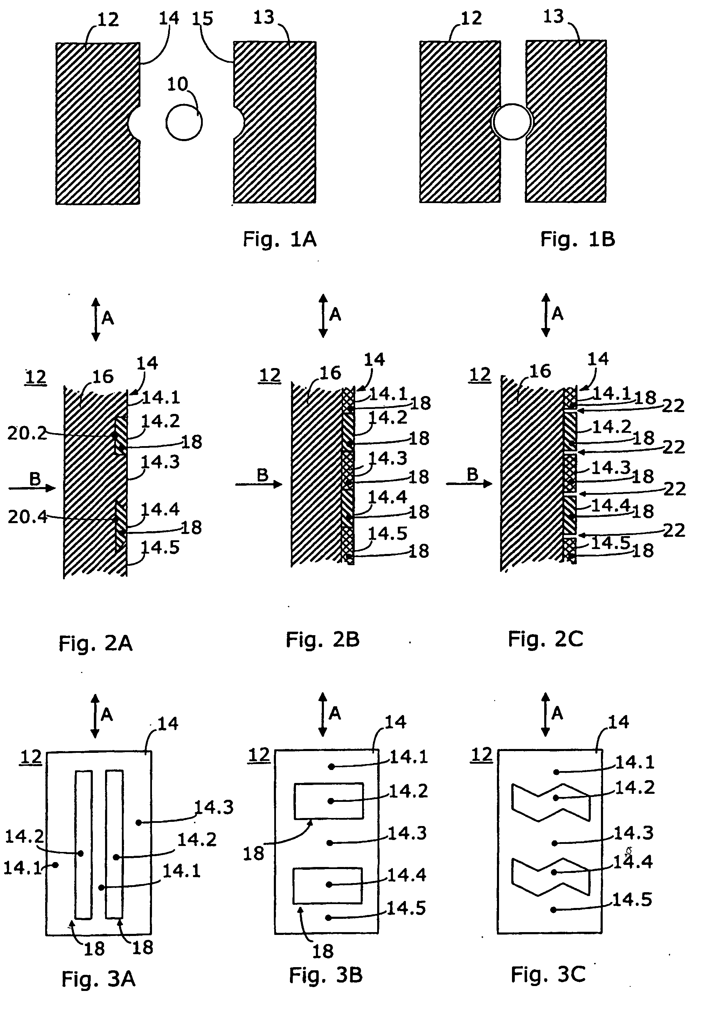

Fig. 1A und Fig. 1B zeigen ein Seil 10 und ein Bremsbackenpaar mit zwei Bremsbacken 12, 13, die zum Bremsen bzw. Blockieren des Seiles 10 vorgesehen sind. Die Bewegung des Seiles 10 relativ zu den Bremsbacken 12, 13 ist hierbei senkrecht zur Zeichnungsebene. Die Bremsbacken 12, 13 sind im dargestellten Ausführungsbeispiel spiegelsymmetrisch ausgebildet und angeordnet. Es sei noch bemerkt, dass die Zahl von zwei Bremsbacken und die dargestellte Anordnung und Formgebung üblich, aber nicht zwingend sind.

Jede der Bremsbacken 12, 13 weist eine Bremsschicht 14 bzw. 15 mit einer Gesamt-Wirkfläche auf, die mindestens annähernd komplementär zur Aussenfläche des Seiles 10 ausgebildet ist. In der Darstellung gemäss Fig. 1A wird das Seil 10 nicht abgebremst, die Bremsbacken 12 und 13 nehmen nicht ihre Wirklage ein und die zur Anlage am Seil 10 bestimmte Wirkflächen der Bremsschichten 14 und 15 der Bremsbacken 12 bzw. 13 berühren hier das Seil 10 nicht. In der Darstellung gemäss Fig. 1B wird das Seil 10 abgebremst, die Bremsbacken 12, 13 liegen unter Druck am Seil 10 an, so dass die zur Anlage am Seil 10 bestimmten Gesamt-Wirkflächen der Bremsschichten 14 und 15 das Seil 10 berühren.

In Fig. 2A ist eine einzelne Bremsbacke 12 dargestellt, die zur Durchführung einer Bremsung in Richtung eines Pfeils B verschiebbar ist, während die Richtung der Relativbewegung von Seil 10 und Bremsbacke 12 durch einen Doppelpfeil A angegeben ist.

Die in Fig. 2A dargestellte Bremsbacke 12 umfasst einen Bremsbackenkörper 16 mit der Bremsschicht 14, welche durch die zur Anlage am Seil 10 bestimmte Gesamt-Wirkfläche begrenzt ist. Die Bremsschicht 14 weist mehrere Schichtbereiche aus unterschiedlichen Materialien auf. Bei dem in Fig. 2A dargestellten Teil der Bremsbacke 12 sind von der Bremsschicht 14 die fünf aneinander grenzenden Schichtbereiche 14.1 bis 14.5 sichtbar. Die Schichtbereiche 14.1, 14.3, 14.5 sind durch ein erstes Material, nämlich das Material des Bremsbackenkörpers 16 selbst, gebildet. Die Schichtbereiche 14.2, 14.4 sind durch ein anderes Material gebildet; sie sind Aussenflächen von Einsatzteilen 18, welche in Ausnehmungen 20.2 bzw. 20.4 des Bremsbackenkörpers 16 befestigt sind, wobei die Ausnehmungen 20.2 bzw. 20.4 von der die Bremsschicht 14 begrenzenden Wirkfläche aus gehen und sich in den Bremsbackenkörper 16 hinein erstrecken.

Die - für die beabsichtigte Art der Bremsung bzw. Blockierung eines Geschwindigkeitsbegrenzerseils positiven - Wirkeigenschaften der beiden Materialien sind unterschiedlich. Durch ihr Zusammenwirken beim Anlage am Seil 10, können die spezifischen Wirkeigenschaften beider Materialien zeitgleich genutzt werden. Mit einer geeigneten Dimensionierung der gesamten Bremsschicht 14 und der einzelnen Schichtbereiche 14.1 bis 14.5, kann die Art und der Verlauf der Bremsung beeinflusst werden. Die Abmessungen der einzelnen Schichtbereiche können gleich oder unterschiedlich sein.

Die Befestigung der Einsatzteile 18 im Bremsbackenkörper 16 kann in beliebiger Weise, insbesondere kraftschlüssig oder formschlüssig, erfolgen; als Beispiele für mögliche Verbindungen seien Klebstoffe und mechanische Verbindungselemente wie Schrauben oder Nieten genannt. Es kann auch eine zum Beispiel schwalbenschwanzartige Ausbildung, wie sie in Fig. 2A für den untersten der Einsatzteile 18 dargestellt zur Anwendung kommen. Auch geeignet ist ein Press- bzw. Schrumpfsitz.

Fig. 2B zeigt eine einzelne Bremsbacke 12 mit einem Bremsbackenkörper 16. Alle Schichtbereiche 14.1 bis 14.5 der Bremsschicht 14 sind hier durch Aussenflächen von Einsatzteilen 18 gebildet, die am Bremsbackenkörper 16 befestigt sind. Hierbei sind die Schichtbereiche 14.1, 14.3, 14.5 durch ein erstes Material und die Schichtbereiche 14.2, 14.4 durch ein zweites Material gebildet.

Eine weitere Bremsbacke 12 ist in Fig. 2C dargestellt. Während bei den Bremsbacken der Fig. 2A und 2B jeweils die benachbarten Schichtbereiche unmittelbar aneinander angrenzen, sind gemäss Fig. 2C benachbarte Schichtbereiche 14.1 und 14.2, 14.2 und 14.3, 14.3 und 14.4, 14.4 und 14.5 durch Lücken 22 voneinander getrennt.

Die Fig. 3A bis 3C zeigen beispielhaft drei weitere Varianten der Unterteilung der Bremsfläche 14 in die von einem ersten Material gebildeten Schichtbereiche 14.1, 14.3, 14.5 und die von einem zweiten Material gebildeten Schichtbereiche 14.2, 14.4.

Die Bremsbacke 12 gemäss Fig. 3A zeigt die beiden Schichtbereiche 14.2, 14.2, die durch Einsatzteile 18 gebildet sind, in Form von Streifen, die sich parallel zur Richtung der Relativbewegung von Seil 10 und Bremsbacke 12, das heisst in Richtung des Pfeils A, erstrecken. Bei dieser Anordnung ist der jeweils zwischen den Bremsbacken befindliche Längenabschnitt des Seiles praktisch dauernd, jedoch nur mit Teilen seines Umfanges, im Kontakt mit dem zweiten Material der Bremsschicht.

Die Bremsbacke 12 gemäss Fig. 3B zeigt die beiden Schichtbereiche 14.2, 14.4, die durch Einsatzteile 18 gebildet sind, in Form von Streifen, die sich senkrecht zur Richtung der Relativbewegung von Seil 10 und Bremsbacke 12 erstrecken. Bei dieser Anordnung ist der jeweils zwischen den Bremsbacken befindliche Längenabschnitt des Seiles zeitlich abwechseln mit dem ersten und dem zweiten Material der Bremsschicht in Kontakt, jedoch mit seinem ganzen Umfang oder einem wesentlichen teil seines Umfanges. Die Schichtbereiche können auch in Schräglage, zum Beispiel unter einem Winkel von 45°, zum Pfeil A angeordnet sein.

In Fig. 3C ist eine Bremsbacke dargestellt, bei welcher die Schichtbereiche 14.2, 14.4 in einer fischgrät-artigen Konfiguration in der Bremsschicht 14 angeordnet sind.

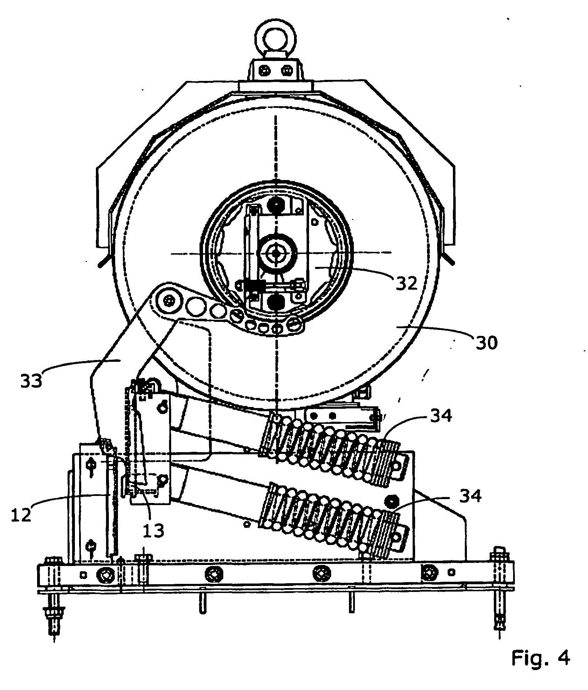

Fig. 4 zeigt Einzelheiten einer Einrichtung zum Bremsen bzw. Blockieren des - nicht dargestellten - Seiles, mit Bremsbacken 12, 13 nach der Erfindung.

In Fig. 4 ist ein Aufzugs-Geschwindigkeitsbegrenzer mit einer Seilrolle 30 für ein Geschwindigkeitsbegrenzerseil dargestellt. Die Seilrolle 30 weist zwei Fliehgewichte 32 auf, welche mit einem Hebel 33 zusammenwirken. Von den zweien zum Bremsen des Seiles bestimmten Bremsbacken 12, 13 ist die Bremsbacke 12 fest, und die Bremsbacke 13 ist über Parallelogramm-Lenker mit Federn 34 so geführt, dass sie in angehobener Position vom - nicht dargestellten - Seil und von der Backe 12 entfernt ist. In dieser angehobenen Position wird sie durch eine Nase gehalten, die an einem ersten, hierbei vertikalen Arm des Hebels 33 angebracht ist.

Diese Stellung wird eingenommen, wenn die Geschwindigkeit des Geschwindigkeitsbegrenzerseils unter einer bestimmten Grenzgeschwindigkeit liegt. Bei Übergeschwindigkeit, das heisst, wenn die Geschwindigkeit des Geschwindigkeitsbegrenzerseils die Grenzgeschwindigkeit übersteigt, bewegen sich die beiden Fliehgewichte 32 radial von der Zentralachse der Seilrolle 30 nach aussen und treffen dabei auf den zweiten, mit Ausnehmungen versehenen Arm des Hebels 33. Dadurch dreht sich der Hebel 33 - in Fig. 4 im Uhrzeigersinn - wodurch sich die genannte Nase nach links bewegt und die nun nicht mehr auf ihr abgestützte Bremsbacke 13 fallen lässt. Durch die Wirkung der schrägen Parallelogramm-Lenker mit den Federn 34 wird die Bremsbacke 13 gegen das Seil und die andere Bremsbacke 12 geführt und vom Seil abwärts auf einen Anschlag mitgerissen. Die horizontale Komponente der Bewegung hat zur Folge, dass das Seil zwischen beiden Bremsbacken 12, 13 geklemmt wird, wobei die Klemmkraft durch die Federn 34 der Parallelogramm-Lenker limitiert ist.

Die neue Bremsbacke ist insbesondere, aber nicht ausschliesslich, geeignet zum Einsatz in Seilbremsen von Aufzügen, beispielsweise zum Bremsen eines Geschwindigkeitsbegrenzerseiles oder zum Bremsen der Tragseile von Aufzugskabine und Gegengewicht. Sie kann aber auch bei anderen seilbetriebenen Fördermitteln, zum Beispiel bei Seilbahnen, Verwendung finden.

## Patentansprüche

1. Bremsbacke (12, 13) zu einer auf ein Seil (10) wirkenden Bremse eines Aufzugs oder eines anderen seilbetriebenen Fördermittels, mit einer dem zu bremsenden Seil (10) zugewandten Bremsschicht (14, 15) mit einer Gesamt-Wirkfläche, wobei die Bremsschicht (14, 15) in eine Wirklage bringbar ist, in der im Wesentlichen die Gesamt-Wirkfläche am Seil (10) anliegt und die Bremsschicht (14, 15) mindestens zwei Schichtbereiche (14.1, 14.2, 14.3, 14.4, 14.5) besitzt, wobei jeweils benachbarte Schichtbereiche aus unterschiedlichen Materialien bestehen,
**dadurch gekennzeichnet,**
**dass** Wirkflächen der mindestens zwei Schichtbereiche (14.1, 14.2, 14.3, 14.4, 14.5) in der Wirklage zusammen am Seil (10) anliegen, um unterschiedliche Wirkeigenschaften der Materialien zeitgleich bei dem Bremsen des Seiles (10) nutzbar zu machen.

2. Bremsbacke (12, 13) nach Anspruch 1,
**dadurch gekennzeichnet,**
**dass** die Gesamt-Wirkfläche der Bremsschicht (14, 15) mindestens annähernd kontinuierlich und zum Seil (10) komplementär ist, wenn die Bremsbacke (12, 13) nicht ihre Wirklage einnimmt.

3. Bremsbacke (12) nach einem der Ansprüche 1 bis 2,
**dadurch gekennzeichnet,**
**dass** sie einen Bremsbackenkörper (16) aufweist, der die mindestens zwei Schichtbereiche (14.1, 14.2, 14.3, 14.4, 14.5) der Bremsschicht (14) umfasst.

4. Bremsbacke (12) nach einem der Ansprüche 1 bis 3,
**dadurch gekennzeichnet,**
**dass** der Bremsbackenkörper (16) mindestens einen der Schichtbereiche (14.1, 14.3, 14.5) der Bremsschicht (14) bildet.

5. Bremsbacke (12) nach einem der Ansprüche 1 bis 4,
**dadurch gekennzeichnet,**
**dass** der aus dem einen Material bestehende Schichtbereich (14.1, 14.2, 14.3) mindestens eine Ausnehmung aufweist, in welcher ein Körper (18) aufgenommen ist, der den aus dem anderen Material bestehenden Schichtbereich (14.2, 14.4) bildet.

6. Bremsbacke (12) nach einem der Ansprüche 1 bis 5,
**dadurch gekennzeichnet,**
**dass** benachbarte, durch die unterschiedlichen Materialien gebildeten Schichtbereiche der Bremsschicht (14) unmittelbar aneinander grenzen.

7. Bremsbacke (12) nach einem der Ansprüche 1 bis 6,
**dadurch gekennzeichnet,**
**dass** mindestens Abschnitte der durch die unterschiedlichen Materialien gebildeten Schichtbereiche der Bremsschicht (14) in Richtung der Relativbewegung (A) zwischen Seil (10) und Bremsbacke (12) nacheinander und/oder quer zu dieser Richtung (A) angeordnet sind.

8. Bremsbacke (12, 13) nach einem der Ansprüche 1 bis 7,
**dadurch gekennzeichnet,**
**dass** ein erstes Material ein metallisches Material, beispielsweise Bronze, vorzugsweise Aluminiumbronze, oder ein nicht-metallisches Material, beispielsweise ein Kunststoff, vorzugsweise mit Faserverstärkung, ist.

9. Bremsbacke (12, 13) nach einem der Ansprüche 1 bis 8,
**dadurch gekennzeichnet,**
**dass** ein zweites Material ein gesintertes Material, beispielsweise Graphitbronze, ist.

10. Bremsbacke (12) nach einem der Ansprüche 1 bis 9,
**dadurch gekennzeichnet,**
**dass** die Bremsschicht (14) mindestens einen Schichtbereich aus einem weiteren Material aufweist, der in der Wirklage am Seil anliegt, und/oder dass die Bremsschicht (14) eine Lücke (22) zwischen benachbarten Schichtbereichen (12.4, 12,5) aufweist.

## Claims

1. Brake shoe (12, 13) for a brake, which acts on a cable (10), of a lift or other cable-drive conveying means, with a brake lining (14, 15), which faces the cable (10) to be braked, with an overall effective surface, wherein the brake lining (14, 15) can be brought into an operative position in which substantially the overall effective surface bears against the cable (10) and the brake lining (14, 15) has at least two lining regions (14.1, 14.2, 14.3, 14.4, 14.5), wherein respectively adjacent lining regions consist of different materials, **characterised in that** effective surfaces of the at least two lining regions (14.1, 14.2, 14.3, 14.4, 14.5) in the operative position together bear against the cable (10) in order to make different effective properties of the materials simultaneously usable during braking of the cable (10).

2. Brake shoe (12, 13) according to claim 1, **characterised in that** the overall effective surface of the brake lining (14, 15) is at least approximately continuous and is complementary to the cable (10) when the brake shoe (12, 13) does not adopt its operative position.

3. Brake shoe (12, 13) according to one of claims 1 and 2, **characterised in that** it comprises a brake shoe body (16) which has at least two lining regions (14.1, 14.2, 14.3, 14.4, 14.5) of the brake lining (14).

4. Brake shoe (12) according to any one of claims 1 to 3, **characterised in that** the brake shoe body (16) forms at least one of the lining regions (14.1, 14.3, 14.5) of the brake lining (14).

5. Brake shoe (12) according to any one of claims 1 to 4, **characterised in that** the lining region (14.1, 14.2, 14.3) consisting of one material has at least one recess, in which is received a body (18) forming the lining region (14.2, 14.4) consisting of the other material.

6. Brake shoe (12) according to any one of claims 1 to 5, **characterised in that** adjacent lining regions, which are formed by the different materials, of the brake lining (14) are directly adjacent to one another.

7. Brake shoe (12) according to any one of claims 1 to 6, **characterised in that** at least sections of the lining regions, which are formed by the different materials, of the brake lining (14) are arranged in succession in the direction of the relative movement (A) between cable (10) and brake shoe (12) and/or are arranged transversely to this direction (A).

8. Brake shoe (12, 13) according to any one of claims 1 to 7, **characterised in that** a first material is a metallic material, for example bronze, preferably aluminium-bronze, or a non-metallic material, for example a plastics material, preferably with fibre reinforcement.

9. Brake shoe (12, 13) according to any one of claims 1 to 8, **characterised in that** a second material is a sintered material, for example graphite-bronze.

10. Brake shoe (12) according to any one of claims 1 to 9, **characterised in that** the brake lining (14) has at least one lining region of a further material, which in the operative position bears against the cable, and/or that the brake lining (14) has a gap (22) between adjacent lining regions (12.4, 12.5).

## Revendications

1. Mâchoire de frein (12, 13) pour un frein d'un ascenseur ou d'un autre moyen de transport à câbles agissant sur un câble (10), comportant une couche de freinage (14, 15) qui est tournée vers le câble à freiner (10) et qui présente une surface active totale, étant précisé que la couche de freinage (14, 15) est apte à être amenée dans une position active dans laquelle la surface active totale est pratiquement appliquée sur le câble (10), et qu'elle comprend au moins deux zones de couche (14.1, 14.2, 14.3, 14.4, 14.5), les zones de couche voisines se composant de matières différentes,
**caractérisée en ce que** les surfaces actives des deux zones de couches, ou plus, (14.1, 14.2, 14.3, 14.4, 14.5), en position active, sont appliquées ensemble sur le câble (10) afin d'exploiter simultanément les caractéristiques actives différentes des matières lors du freinage du câble (10).

2. Mâchoire de frein (12, 13) selon la revendication 1, **caractérisée en ce que** la surface active totale de la couche de freinage (14, 15) est au moins approximativement continue et complémentaire par rapport au câble (10) quand la mâchoire de frein (12, 13) n'adopte pas sa position active.

3. Mâchoire de frein (12) selon l'une des revendications 1 à 2, **caractérisée en ce qu'**elle présente un corps de mâchoire de frein (16) qui comprend les deux zones de couches, ou plus, (14.1, 14.2, 14.3, 14.4, 14.5) de la couche de freinage (14).

4. Mâchoire de frein (12) selon l'une des revendications 1 à 3, **caractérisée en ce que** le corps de mâchoire de frein (16) forme l'une au moins des zones de couches (14.1, 14.3, 14.5) de la couche de freinage (14).

5. Mâchoire de frein (12) selon l'une des revendications 1 à 4, **caractérisée en ce que** la zone de couche (14.1, 14.2, 14.3) composée d'une première matière présente au moins un creux dans lequel est logé un corps (18) qui forme la zone de couche (14.2, 14.4) composée de la seconde matière.

6. Mâchoire de frein (12) selon l'une des revendications 1 à 5, **caractérisée en ce que** des zones de la couche de freinage (14) voisines formées par des matières différentes sont directement contiguës.

7. Mâchoire de frein (12) selon l'une des revendications 1 à 6, **caractérisée en ce que** des sections au moins des zones de la couche de freinage (14) formées par les matières différentes sont disposées successivement dans le sens du mouvement relatif (A) entre le câble (10) et la mâchoire de frein (12) et/ou transversalement par rapport à ce sens (A).

8. Mâchoire de frein (12, 13) selon l'une des revendications 1 à 7, **caractérisée en ce qu'**une première matière est constituée par une matière métallique, par exemple du bronze, de préférence du bronze d'aluminium, ou par une matière non métallique, par exemple une matière plastique, de préférence avec un renforcement par fibres.

9. Mâchoire de frein (12, 13) selon l'une des revendications 1 à 8, **caractérisée en ce qu'**une seconde matière est constituée par une matière frittée, par exemple du graphite au bronze.

10. Mâchoire de frein (12) selon l'une des revendications 1 à 9, **caractérisée en ce que** la couche de freinage (14) présente au moins une zone de couche composée d'une autre matière, qui est appliquée sur le câble, dans la position active, et/ou **en ce que** la couche de freinage (14) présente un vide (22) entre deux zones de couches (12.4, 12.5) voisines.
